# EUROPEAN PATENT APPLICATION

(11) **EP 4 105 165 A1**
(43) Date of publication of application: **21.12.2022**
(21) Application number: 21923605.6
(22) Date of filing: 27.08.2021
(51) Int. Cl.: B67D 1/04, B01D 35/04, B67D 1/08, B67D 1/00, B01D 35/147, B01D 61/02, B01D 61/14, B01D 39/20

(54) **AIR PRESSURIZATION-TYPE WATER PURIFIER**

(30) Priority: 03.05.2021 KR 20210057087
(71) Applicant: Myoung, Sung Hee, Suwon-si, Gyeonggi-do 16420 (KR)
(72) Inventor: HAN, Sang Kun, Suwon-si Gyeonggi-do 16420 (KR); MYOUNG, Sung Hee, Suwon-si Gyeonggi-do 16420 (KR)
(74) Representative: Vossius & Partner Patentanwälte Rechtsanwälte mbB
(86) International application number: PCT/KR2021/011524
(87) International publication number: WO 2022/234895

(57) **Abstract**

The present invention provides an air pressurized water purifier including: a water tank in which water is stored; a filter module installed on a water outlet path of the water tank and configured to filter water stored in the water tank; and an air pressurized module configured to increase air pressure inside the water tank by suppling air to a space in which water is not present in the water tank, thereby pressurizing water stored in the water tank to allow the stored water to be discharged on the water outlet path.

## Description

### Technical field

The present invention relates to an air pressurized water purifier, and more particularly, to an air pressurized water purifier in which water stored in a water tank is pressurized by injecting air into the water tank so that the filtration speed of water that is drained from the water tank and passes through a filter module can be increased.

### Background art

In natural filtration type water purifiers or jug type water purifiers according to the related art, when water is purified using an ultrafiltration filter having a pore of 0.1 or less, due to the size of a narrow pore, a considerable filtration time is required, and it is common to perform a water purification process by separately providing a water reserve tank of water to be purified and a storage tank of purified water so that the water purification process is performed.

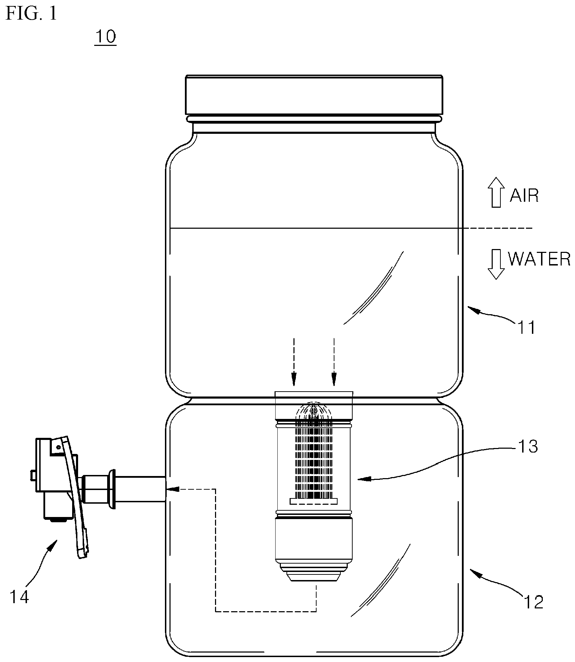

Referring to FIG. 1, a natural filtration type water purification or jug type water purification process according to the related art accompanies disposing a water reserve tank 11 of water to be purified on a storage tank 12 of water having a water outlet valve 14 installed therein, installing an ultrafiltration filter 13 between the storage tank 11 and the water reserve tank 11 so that water in the water reserve tank 11 flows into the storage tank 12 via the filter 13 by own weight.

However, in such natural filtration type water purification methods, the water purification speed is slow so that water purification needs to start before a considerable time for a user's drinking, and contamination of purified water according to the elapse of time may occur. Also, because water to be purified and purified water need to be separately stored, the size of a water purifier product increases more than necessary, and it is difficult to use the water purifier as well as to install the water purifier. Thus, in most natural filtration type filters, in spite of the need of using filters having fine pores such as ultrafiltration filters for filtration such as germs, for the above-described reasons, the pores are large and thus, a carbon filter used to remove chlorine is used, so that a limited water purification function is provided.

Furthermore, in order to solve these problems, in the related art, a method of improving the filtration speed of water to be purified by increasing the water pressure supplied to the filter 13 by directly connecting the water reserve tank to a water supply or by increasing the water pressure of water to be purified to be supplied to the filter 13 using a pump has been used. However, when it is difficult to connect the water supply or a power source cannot be directly connected, the above-described method cannot be used.

### Detailed description of the invention

### Technical problem

The present invention provides an air pressurized water purifier in which the filtration speed of a natural filtration type water purification process can be increased.

### Technical solution

According to an aspect of the present invention, there is provided an air pressurized water purifier including: a water tank in which water is stored; a filter module installed on a water outlet path of the water tank and configured to filter water stored in the water tank; and an air pressurized module configured to increase air pressure inside the water tank by suppling air to a space in which water is not present in the water tank, thereby pressurizing water stored in the water tank to allow the stored water to be discharged on the water outlet path.

### Effects of the invention

According to the present invention, there are the following effects.

First, air pressure of a portion of a water tank in which water is not filled, is increased to improve the filtration speed of water flowing into a filter module so that power consumption can be minimized by reducing resistance in a flow path compared to a water purifier that increases the water pressure in an existing water tank, and of course, a water purification function can be maintained with a small battery for a long time.

Second, a water purification process can be immediately performed so that the inconvenience of a user having to wait for a water purification time can be reduced, and the contamination of the purified water according to the lapse of the water purification time can be prevented.

Third, because a pressing force is provided to a fluid in the filter module to increase the filtration speed, a filter having finer pores can be used so that filtration efficiency can be improved.

Fourth, the water purification time can be saved so that there is no need to separately install a storage water tank for storing purified water, thereby minimizing the installation area of the water purifier.

### Description of the drawings

FIG. 1 is a view illustrating the configuration of a natural filtration type water purifier according to the related art.
FIG. 2 is a flowchart illustrating the overall configuration of an air pressurized water purifier according to an embodiment.
FIG. 3 is a view illustrating the detailed configuration of a check valve of FIG. 2.

### Mode of the invention

Hereinafter, the configuration and operation of embodiments of the present invention will be described in detail with reference to the accompanying drawings.

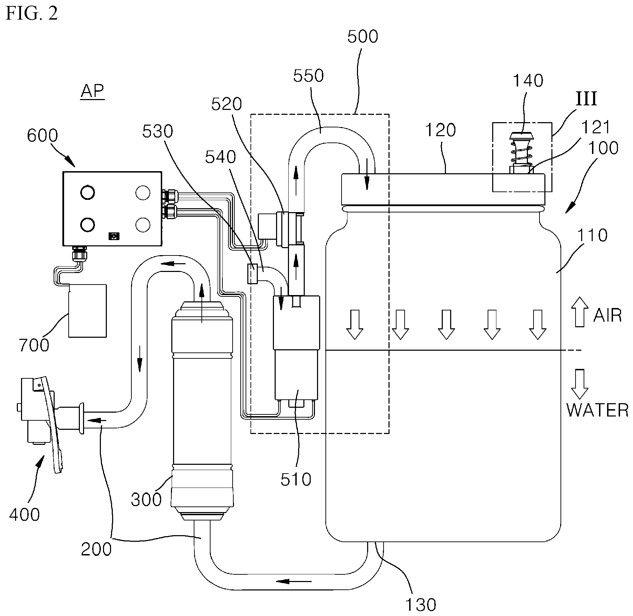

FIG. 2 illustrates the overall configuration of an air pressurized water purifier AP according to an embodiment of the present invention. Referring to FIG. 2, the air pressurized water purifier AP according to an embodiment of the present invention for increasing the filtration speed of water to be purified in a filter module 300 by increasing air pressure by filling air in a water tank 100 includes a water tank 100, a water outlet pipe 200, a filter module 300, a water outlet vale 400, an air pressurized module 500, an air inflow pipe 540, an air supply pipe 550, a control device 600, a battery 700, and a battery charging module (not shown).

The water tank 100 that is a container in which water to be purified is stored, includes a body 110, a water supply cover 120, a water outlet 130, and a check valve 140.

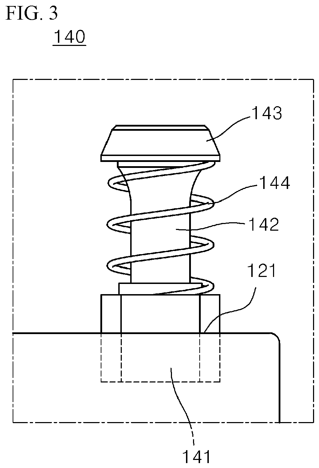

The body 110 is provided in a transparent cylindrical structure having an open upper portion so that an accommodation space of a fluid can be formed in the body 110. However, in an embodiment of the present invention, the shape of the body 110 is a cylindrical shape having an open upper portion made of a transparent material, however, the present invention is not limited thereto, and the body 110 may be a semi-transparent or opaque material, and a portion of the body 110 including side portions or a lower portion may have an open structure, and of course, the body 110 may have an arc-shaped column, an elliptical column, or a polygonal column shape with a hollow inside. The water supply cover 120 that is coupled to the open part of the above-described body 110 and finishes the open part of the body 110, is screw-coupled to the body 110 using screw threads formed in a structure corresponding to an inner circumferential surface of the coupling part and an outer circumferential surface of the body 110. In this case, preferably, a rubber packing (not shown) for sealing is installed between the water supply cover 120 and the open part of the body 110 so as to water-tighten the coupling part in a close contact state. The configuration for screw coupling is also only one embodiment, and of course, other known technical configurations for detachment such as bonding or fitting may be adopted. Furthermore, an air outlet 121 in which the check valve 140 to be described later is installed, is provided. The water outlet 130 that is an outlet of the fluid formed below the body 110, is connected to the water outlet pipe 200 (water outlet path) to be described later. In this case, the water outlet 130 may be formed above or side the body 110, but it is preferable that the water outlet 130 is formed below the body 110 for natural water outlet by the weight of water, and of course, the water outlet 130 may be formed in the water supply cover 120. The check valve 140 that is used to release the pressure in the water tank 100 when the user opens/closes the water supply cover 120 so as to supply water to be purified to the water tank 100, may be installed at the water supply cover 120 or the body 110 of the water tank 100. The structure of the check valve 140 will be described in detail again with reference to FIG. 3 to be described below.

The water outlet pipe 200 that is connected to the water outlet 130 of the water tank 100 and guides water in the water tank 100 discharged through the water outlet 130 to the water outlet vale 400 via the filter module 300, forms a water outlet path on which a filtration process of water to be purified is performed.

The filter module 300 that is installed at one part of the above-described water outlet pipe 200 (water outlet path) and filters water to be purified in the water tank 100 discharged from the water outlet 130, includes one of a microfiltration filter, an ultrafiltration filter, a nanofiltration filter, and a reverse osmosis filter. Here, a known technical configuration may be adopted as the detailed configuration of the microfiltration filter, the ultrafiltration filter, the nanofiltration filter, and the reverse osmosis filter and may be used. Thus, a detailed description thereof will be omitted. Furthermore, a carbon filter having a large pore in addition to filters having fine pores may also be applied to the air pressurized water purifier according to the present invention according to purposes and may be used.

The water outlet valve 400 is installed at a distal end of the water outlet pipe 200, is filtered at the rear end of the water outlet pipe 200 according to the user's opening/closing, i.e., between the water outlet valve 400 and the filter module 300 and provides purified water to the user.

The air pressurized module 500 increases the air pressure inside the water tank 100 by suppling air to the water tank 100 so that the flow velocity of water passing through the filter module 300 is increased and thus, water to be purified in the water tank 100 is pressurized by the air pressure described above, and the air pressurized module 500 includes an air pump 510, a pressure sensor (not shown), a pressure switch 520, and an air filter 530.

The air pump 510 allows the air charged in the water tank 100 by introducing outside air or the outside air in a pressurized state to be introduced into the water tank 100, and it is preferable to install the air pump 510 outside the body 110 of the water tank 100, but of course, the air pump 510 may be installed inside the body 110 of the water tank 100. The pressure sensor that is installed in the air supply pipe 550 or the water tank 100 to measure the air pressure in the water tank 100, is preferably installed in the air supply pipe 550 for modulation with other elements for air pressurization. The pressure switch 520 is installed in the air supply pipe 550 for connecting the air pump 510 to the water tank 100 and controls the pressure of the air supplied into the water tank to be greater than or equal to a set pressure or less than or equal to the set pressure. The air filter 530 is installed at an air inflow pipe 540 (air inflow path) to filter foreign substances from the outside air introduced into the air pump 510.

The control device 600 that controls driving of the air pressurized module 500, controls an on/off operation of the air pressurized module 500, and drives the air pump 510 in response to a drop signal of the air pressure inside the water tank 100 measured by the pressure sensor in a state in which the control device 600 is electrically connected to the pressure sensor, the pressure switch 520 and the air pump 510, i.e., in response to a loss inside pressure, and when the pressure inside the water tank 100 exceeds a preset limited value by driving of the air pump 510, driving of the air pump 510 is stopped. Here, preferably, an operation sensor (not shown) for sensing a valve opening/closing operation is further installed at the water outlet valve 500, and a driving operation of the air pump 510 is performed by the control device 600 using a measured value of the operation sensor. However, of course, because his is for modulation of the air pressurized module 500 and the drop of the pressure inside the water tank 100 occurs depending on the opening/closing operation of the water outlet valve 400, preferably, the driving operation of the air pump 510 is controlled by sensing the user's opening/closing operation of the water outlet valve 500 by using a pressure sensor of the air supply pipe 540.

The battery 700 supplies the driving power source of the air pump 510, the pressure sensor (not shown), the pressure switch 520, and the control device 600, and may supply power to other three configurations for supplying power to the above-described four configurations or electrically connected to each other by the control device 600. The air pressurized water purifier AP according to an embodiment of the present invention, unlike other water purifiers that increase the water pressure of water to be purified and improve the filtration speed of water, the filtration speed of water can be improved by increasing the air pressure to pressurize water to be purified. Power consumption compared to water purifiers having a technical principle for increasing the water pressure descried above can be minimized. Thus, a water purification operation for a long time can be performed only with the battery 700 rather than the power supplied at all times.

Also, because the water purification process can be carried out immediately, time waiting for the water purification process can be saved, the deterioration of the purified water over time can be prevented, it is not necessary to configure a water tank for storage to accommodate the purified water and thus the size of the water tank can be miniaturized, the installation area can be reduced, and thus the user can easily handle the water purifier.

In addition, a technical configuration for air pressurization and a technical configuration for a filter are modulated and standardized based one water tank 100 so that the above-described air pressurized water purification operation can be performed on an unspecified water tank used for general purpose and thus the user's convenience and universality can be provided and the position of the water outlet valve 400 can be freely adjusted according to the modulation so that better installation convenience can also be provided.

Furthermore, the air pressurized air purifier according to an embodiment of the present invention can be manufactured in a portable small size so that the user can hold or carry a water tank and modules including the water tank for the purposes of camping, travel or the like.

A battery charging module (not shown) charges the battery 700 so that the battery 170 can be re-used, and the convenience including portability of the air-pressurized water purifier AP of the present invention can be increased by having a structure that can charge the battery 700 in advance for future use of the battery 700 as well as a structure that can charge the battery 700 in the process of using the battery 700.

Hereinafter, the detailed configuration and function of the check valve 140 will be described in detail with reference to FIG. 3. However, redundant content with the previous description will be omitted or briefly described.

Referring to FIG. 3, the check valve 140 according to an embodiment of the present invention that opens/closes the air outlet 121 formed in the body 110 so that the water supply cover 120 can be easily separated from the body 110 of the water tank 100 and thus allows the inside of the body 110 to communicate with the outside and the pressure inside the body 110 can be dropped to an atmospheric pressure, includes a disc 141, a shaft 142, a catch portion 143, and a valve spring 144.

The disc 141 is formed with a greater radius than the radius of the air outlet 121 and is in close contact with the water supply cover 120 while covering the air outlet 121 inside the body 110. The shaft 142 is inserted into the air outlet 121 in an axial direction while one end of the shaft 142 is coupled or integrated to or with the disc 141 so that the shaft 142 makes a reciprocal motion in the air outlet 121. The catch portion 143 is formed with a greater radius than the width of the shaft 142, i.e., a greater radius than that of the air outlet 121 and is coupled or integrated to or with the other end of the shaft 142 so that the movement distance of the shaft 142 inserted into the air outlet 121 is limited. The valve spring 144 is inserted into the shaft 142 so that one end of the valve spring 144 supports the outer surface of the water supply cover 120 and the other end of the valve spring 144 supports the catch portion 143 so that the catch portion 143 is far away from the water supply cover 120 due to elasticity and the above-described disc 141 is in close contact with the inner surface of the water supply cover 120 while covering the air outlet 121. In the present embodiment, the valve spring 144 is a compressive coil spring, as shown. In this case, the air outlet 121 is formed in the water supply cover 120. However, the present invention is not limited thereto, and it is obvious that the air outlet 121 formed in any part of the body 110 is also within the technical spirit of the present invention.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. An air pressurized water purifier comprising:
a water tank in which water is stored;
a filter module installed on a water outlet path of the water tank and configured to filter water stored in the water tank; and
an air pressurized module configured to increase air pressure inside the water tank by suppling air to a space in which water is not present in the water tank, thereby pressurizing water stored in the water tank to allow the stored water to be discharged on the water outlet path.

2. The air pressurized water purifier of claim 1, wherein the water tank comprises:
a body partly formed in an open structure to receive and store water through the open part;
a water supply cover coupled to the open part of the body in a state of covering the open part of the body and closely coupled with a rubber packing for sealing therebetween; and
a water outlet formed in the water supply cover or the body to drain the water stored in the body.

3. The air pressurized water purifier of claim 2, wherein the water tank further comprises a check valve configured to open/close an air outlet formed in the water supply cover or the body so that the water supply cover is easily separated from the body, thereby allowing an inside of the body to communicate with the outside and to drop pressure inside the body.

4. The air pressurized water purifier of claim 3, wherein the check valve comprises:
a disc formed with a greater radius than a radius of the air outlet and being in close contact with the body while covering the air outlet inside the water supply cover or the body;
a shaft inserted into the air outlet in an axial direction while one end of the shaft is coupled to the disc;
a catch portion formed with a greater radius than a width of the shaft and coupled to the other end of the shaft, thereby limiting a movement distance of the shaft inserted into the air outlet; and
a valve spring inserted into the shaft so that one end of the valve spring supports an outer surface of the water supply cover and the other end of the valve spring supports the catch portion so that the disc is in close contact with an inner surface of the water supply cover or the body due to elasticity so that the disc closes the air outlet.

5. The air pressurized water purifier of claim 1, wherein the filter module is installed at one part of a water outlet path formed between a water outlet of the water tank and a water outlet valve for providing water drained from the water outlet to a user.

6. The air pressurized water purifier of claim 1, wherein the filter module comprises one of a microfiltration filter, an ultrafiltration filter, a nanofiltration filter, a reverse osmosis filter, and a carbon filter.

7. The air pressurized water purifier of claim 1, wherein the air pressurized module comprises:
an air pump; and
a pressure sensor installed on a supply path of air for connecting the air pump to the water tank or in a space in which water is not present in the water tank, so as to measure air pressure inside the water tank.

8. The air pressurized water purifier of claim 1, wherein the air pressurized module comprises:
an air pump; and
a pressure switch installed on a supply path of air for connecting the air pump to the water tank and configured to adjust pressure of air supplied to an inside of the water tank to be equal to or greater than a set pressure or to be equal to or less than the set pressure.

9. The air pressurized water purifier of claim 1, wherein the air pressurized module comprises:
an air pump configured to supply air to the water tank; and
an air filter configured to filter air introduced into the air pump.

10. The air pressurized water purifier of claim 1, further comprising a battery electrically connected to the air pressurized module and configured to provide power to the air pressurized water module.

11. The air pressurized water purifier of claim 10, further comprising a battery charging module having a structure in which the battery is capable of being charged in a use or non-use state of the battery.

12. The air pressurized water purifier of claim 1, further comprising a control device configured to control driving of the air pressurized module.

13. The air pressurized water purifier of claim 12, wherein the air pressurized module comprises:
an air pump; and
a pressure sensor installed on a supply path of air for connecting the air pump to the water tank or in a space in which water is not present in the water tank, so as to measure air pressure inside the water tank, and
the control device drives the air pump in response to a drop signal of air pressure inside the water tank measured by the pressure sensor and stops driving of the air pump when the air pressure inside the water tank measured by the pressure sensor exceeds a preset value.

14. The air pressurized air purifier of claim 12, wherein the air pressurized module comprises:
an air pump; and
a pressure sensor installed on a supply path of air for connecting the air pump to the water tank or in a space in which water is not present in the water tank, so as to measure air pressure inside the water tank, and
the air pressurized water purifier further comprises a battery configured to supply power to the air pump, the pressure sensor, and the control device.

15. The air pressurized water purifier of claim 12, wherein the air pressurized module comprises:
an air pump; and
a pressure switch installed on a supply path of air for connecting the air pump to the water tank and configured to adjust pressure of air supplied to an inside of the water tank to be equal to or greater than a set pressure or to be equal to or less than the set pressure, and
the air pressurized water purifier further comprises a battery configured to supply power to the air pump, the pressure sensor, and the control device.

16. The air pressurized water purifier of claim 1, wherein the water tank is formed in a portable size at which a user is able to hold or carry.

17. The air pressurized water purifier of claim 1, wherein the air pressurized water purifier is formed in a portable size at which a user is able to hold or carry.

18. An air pressurized water purifier comprising:
a water tank in which water is stored;
a water outlet pipe configured to provide a water outlet path on which water discharged from the water tank flows;
a filter module configured to filter water flowing along the water outlet path;
an air pressurized module configured to increase air pressure above a water surface in the water tank to pressurize water stored in the water tank; and
a control device configured to control an operation of the air pressurized module,
wherein the air pressurized module comprises an air pump configured to supply outside air into a space above the water surface and a pressure sensor configured to measure air pressure in the space above the water surface, and
the control device drives the air pump in response to a drop signal of air pressure inside the water tank measured by the pressure sensor and stops driving of the air pump when the air pressure inside the water tank measured by the pressure sensor exceeds a preset value, and
the water tank comprises a body configured to provide an inside space in which water is stored, and having an opening formed above the water tank, a water supply cover detachably coupled to the body so that the opening is sealed, and a check valve installed at the water supply cover so as to drop air pressure in the space above the water surface, and
an air outlet opened/closed by the check valve is formed in the water supply cover, and
the check valve comprises a disc being in close contact with an inner surface of the water supply cover in the space above the water surface, a shaft extending from the disc to protrude outwards of the water supply cover through the air outlet, a catch portion located at an outer end of the shaft and extending out of a side of the shaft, and a valve spring inserted into the shaft, located outside the water supply cover and configured to provide an elastic force so that the disc is maintained in a state of closing the air outlet, and
the shaft is movable in an axial direction with respect to the air outlet, and
both ends of the valve spring are in close contact with an outer surface of the catch portion and an outer surface of the water supply cover, respectively.
